Europäisches Patentamt

European Patent Office

Office européen des brevets

(19)

(11) **EP 0 593 523 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(21) Anmeldenummer: **92912833.8**

(22) Anmeldetag: **26.06.1992**

(51) Int Cl.6: **H02P 6/06**

(86) Internationale Anmeldenummer:
**PCT/DE92/00529**

(87) Internationale Veröffentlichungsnummer:
**WO 93/01651 (21.01.1993 Gazette 1993/03)**

(54) **VERFAHREN ZUM BETRIEB EINES DREHZAHLREGELBAREN MOTORS**

PROCESS FOR OPERATING A SPEED CONTROLLED MOTOR

PROCEDE DE COMMANDE D'UN MOTEUR A VITESSE DE ROTATION REGLABLE

(84) Benannte Vertragsstaaten:
**DE ES FR GB IT SE**

(30) Priorität: **05.07.1991 DE 4122391**

(43) Veröffentlichungstag der Anmeldung:
**27.04.1994 Patentblatt 1994/17**

(73) Patentinhaber: **ROBERT BOSCH GMBH**
**D-70442 Stuttgart (DE)**

(72) Erfinder:
• **HENNEBERGER, Gerhard**
**D-5100 Aachen (DE)**
• **BRUNSBACH, Bernd-Josef**
**D-5100 Aachen (DE)**

(56) Entgegenhaltungen:
**EP-A- 0 415 402**      **US-A- 4 792 737**

• **ARCHIV FÜR ELEKTROTECHNIK Bd. 73, 1990, DE, SS. 325-335; B.-J. BRUNSBACH et al.: 'Einsatz eines Kalman-Filters zum feldorientierten Betrieb'**

## Beschreibung

Stand der Technik

Die Erfindung geht aus von einem Verfahren nach der Gattung des Hauptanspruchs.

Gegenwärtige, unter Verwendung von mechanischen Sensoren aufgebaute Steuerungen für drehzahlregelbare Motoren aller Art weisen häufig eine Kaskadenstruktur auf, wobei dem Lageregelkreis der Drehzahlregelkreis sowie der Stromregelkreis unterlagert sind. Besonders große Anforderungen sind an den Drehzahlsensor und den zugehörigen Regelkreis gestellt. Infolge der konkurrierenden Anforderungen einer einerseits möglichst großen Auflösung und anderseits einer hohen Abtastfrequenz sind insbesondere die Drehzahlsensoren aufwendig und teuer.

Um den Drehzahlsensor einzusparen, ist es grundsätzlich bekannt, ein Kalman-Filter zur Schätzung der Drehzahl zu verwenden. Alle bekannten Vorschläge verwenden aber als Zustandsgrößen insbesondere elektrische Meßgrößen wie Motorstrom und Motorspannung. Aus der Schrift M. Schroedl, Control of a Permanent Magnet Synchronous Maschine using a new Position Estimator, ICEM 1990, ist ein System bekannt, das auf der Vereinfachung der Momentengleichung durch Annahme eines innerhalb eines Abtastschrittes konstanten Lastmoments beruht und als Ausgangsgröße den Rotorlagewinkel benutzt. Dieser Vorschlag führt auf ein relativ komplexes Modell und macht dadurch eine große Rechnerleistung erforderlich, sowie darüberhinaus zusätzliche Sensoren.

Aus der US-PS 4 792 737 ist ein Verfahren zur Steuerung eines bewegten Objektes bekannt, bei dem die Drehzahl des zur Bewegung des Objektes verwendeten Motors mit Hilfe eines Kalmann-Filters geschätzt wird. Ausgangsgröße für die Drehzahlschätzung ist der zu diesem Zweck gemessene Motorstrom. Als Vergleichswert zur Erzeugung eines Fehlersignals wird weiterhin mittels eines Lagegebers die Lage des bewegten Objektes erfaßt. Entsprechend der Abweichung zwischen dem gemessenen Lagewert und einem von dem Kalmann-Filter ausgegebenen Schätzwert erfolgt ein Stelleingriff in den Bewegungsregelkreis.

Aus der Schrift "Archiv für Elektrotechnik", 1990, Seite 325 bis 335 ist der Vorschlag bekannt, mit Hilfe eines Kalman-Filters einen Antrieb ohne mechanische Sensoren zur realisieren. Mittels des Filters werden allein aus den elektrischen Klemmengrößen Strom und Spannung alle übrigen Zustandsgrößen der Maschine geschätzt. Zur Motorregelung werden weder ein Lagesensor noch ein Drehzahlsensor benötigt. Die Schrift legt dar, daß ein Betrieb eines asynchronen Motors unter Zuhilfenahme eines Kalman-Filters möglich ist. Nachteilieg an dem in dieser bekannten Schrift beschriebenen Verfahren ist, daß die erzielte Schätzgenauigkeit der Drehzahl noch unbefriedigend ist. Entweder ist deshalb für hochgenaue Anwendungen die Installation eines sehr leistungsfähigen und dadurch sehr teueren Rechners erforderlich oder aber es müssen erhebliche Abstriche bei der erzielbaren Genauigkeit, etwa infolge eines vereinfachten Maschinenmodellansatzes oder einer zu großen Abtastzeit in Kauf genommen werden. Insgesamt ist das in der Schrift vorgeschlagene Verfahren mit den gegenwärtigen technischen Möglichkeiten noch zu aufwendig.

Ziel der vorliegenden Erfindung ist es, ein Regelverfahren anzugeben, welches insbesondere auch bei kleinen Drehzahlen eine hohe Genauigkeit garantiert.

Die Aufgabe wird gelöst mit einem Verfahren mit den Merkmalen des Hauptanspruchs. Das erfindungsgemäße Verfahren macht einen mechanischen Drehzahlsensor überflüssig. Dennoch wird auch bei kleinen Drehzahlen die Drehzahl präzise ermittelt. Ein weiterer Vorteil des erfindungsgemäßen Verfahren ist, daß hinsichtlich des Rechners nur geringe Anforderungen gestellt sind. Die erforderliche Rechenleistung kann mit zur Zeit erhältlichen PC's erzielt werden. Von Vorteil ist desweiteren, daß der benötigte Lagegeber nur eine relativ geringe Genauigkeit aufweisen muß. Das erfindungsgemäße Verfahren gestattet die Gewinnung eines Drehzahlsignales aus einem relativ ungenauen Lagesignal. Zusätzlich zum Drehzahlwert liefert eine Ausgestaltung des erfindungsgemäßen Verfahrens noch einen aktuellen sowie einen voraussagenden Lageschätzwert.

Ein Ausführungsbeispiel des erfindungsgemäßen Verfahrens ist in der Zeichnung dargestellt und nachfolgend näher beschrieben.

Zeichnung

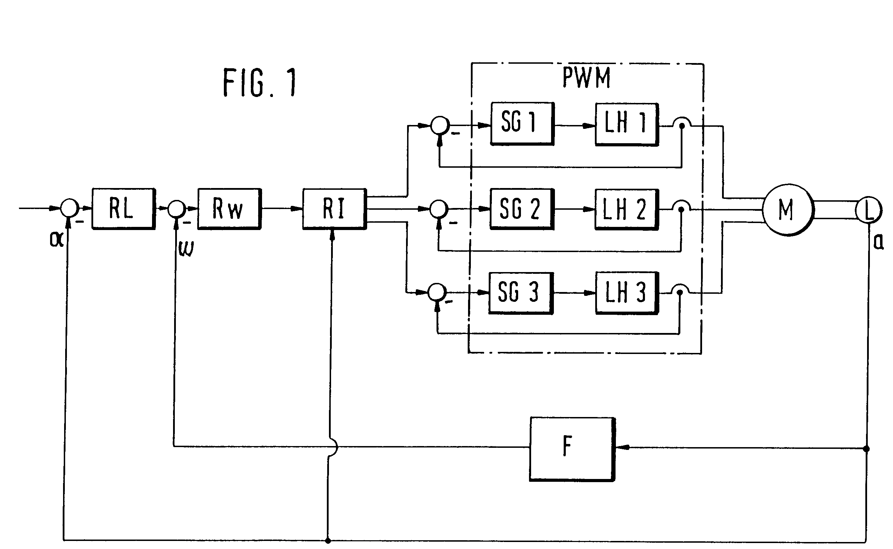

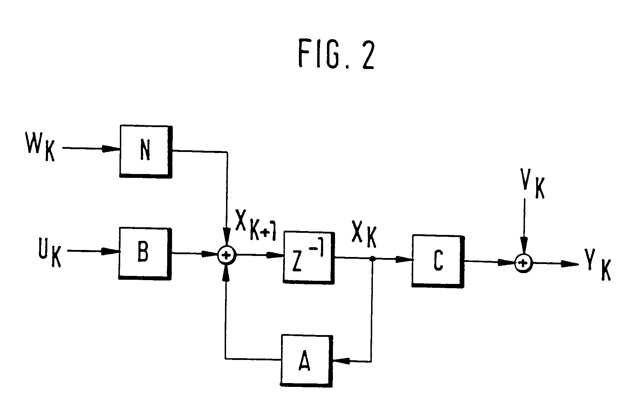

Es zeigen Figur 1 ein Blockschaubild der Struktur eines mit Hilfe des erfindungsgemäßen Verfahrens betriebenen Motors, Figur 2 ein Strukturbild des zugehörigen Signalprozesses.

Beschreibung des Ausführungsbeispiels

Die Struktur eines nach dem erfindungsgemäßen Verfahren betriebenen elektrischen Motors ist in Figur 1 dargestellt. Die Regelung des Motors M erfolgt in Form einer Kaskadenregelung, wobei einem Lageregler RL ein Drehzahlregler RW sowie ein Stromregler RI beispielhaft untergeordnet sind. Über den Umrichter PWM erfolgt die eigentliche Motoransteuerung. Der Umrichter PWM verfügt zu diesem Zweck für jeden Strang über einen Leistungshalbleiterblock LH1 - LH3 sowie eine zugehörige Steueranordnung SG1 - SG3. Auf der Motorwelle ist an einer geeigneten Stelle, zum Beispiel zwischen Motor und Last zur Erfassung der Winkellage ein handelsüblicher Absolut- oder Inkrementalgeber L angeordnet. Das von dem Lagegeber L abgegebene diskrete oder nicht diskrete Lagesignal wird dem Lageregler RL im Lageregelkreis zurückgeführt.

Desweiteren wird das Lagesignal über eine Verzweigung einem Filter F zugeführt, das zur Bestimmung der Drehzahl dient. Das Filter F leitet aus dem Lagesignal die Drehzahl ωab, die anschließend in den Drehzahlreglkreis zurückgeführt wird. Die Motorregelung mittels eines Kaskadenregelkreises ist, da sie weit verbreitet ist, stellvertretend genannt. Das Verfahren ist aber auch bei jeder anderem Regelkreisstruktur anwendbar.

Der Lagegeber L ist zum Beispiel ein herkömmlicher Inkrementalgeber mit 1024 Teilungen. Je nach Anforderungen können auch wesentlich genauere Geber eingesetzt werden. Allen Lagegebern gemeinsam ist, daß die abgegebenen Lagesignale fehlerbehaftet sind. Bezüglich der Verteilung der Fehler um den wahren Lagewert kann vorausgesetzt werden, daß diese gaußförmig oder zumindest gleichverteilt sind, so daß eine Gaußkurve jedenfalls eine gute Näherung darstellt. Aus dem Lagesignal läßt sich grundsätzlich durch Differentiation nach der Zeit bereits in einfacher Weise die Drehzahl bestimmen. In der Regel erfolgt dabei eine Annäherung der exakten Differentiation durch einen Differenzenquotienten $\omega_K = (\alpha_{K+1} - \alpha_K)/T$. Darin sind $\alpha_K$, $\alpha_{K+1}$ zwei in aufeinanderfolgenden Abtastschritten bestimmte Rotorlagen, T die Abtastzeit. Diese Art der Berechnung führt aber zu einem Fehler, der abhängig ist von der aktuellen Drehzahl. Während die Bestimmung der Drehzahl aus dem Lagewinkel bei großen Drehzahlen unproblematisch ist, führt bei kleinen Drehzahlen schon eine geringe Fehlerhaftigkeit des Lagewertes zu erheblichen Schwankungen der daraus abgeleiteten Drehzahl. Die Methode des Differenzenquotienten ist deshalb für hochgenaue Anwendungen insbesondere bei kleinen Drehzahlen ungeeignet.

Um ohne Einsatz eines mechanischen Drehzahlsensors trotzdem einen genauen Drehzahlwert zu erhalten, wird deshalb vorgeschlagen, ein Kalman-Filter zur Berechnung der Drehzahl einzusetzen.

Der Kalman-Filter-Algorhitmus beruht auf einem Prozeßmodell im zeitdiskreten Zustandsraum. Die Formulierung ist allgemein und nicht vom spezifischen Prozeßmodell abhängig. Ein wesentlicher Vorteil des Kalman-Filter-Algorhitmus ist, daß Modellfehler und Meßfehler des betrachteten Prozesses in gewissen Grenzen zugelassen werden kann. Das Prinzip des Kalman-Filter-Algorhitmus besteht darin, eine Filterung für den aktuellen Wert des Zustandsvektors und eine Prädikation für den nächten Abtastzeitpunkt zu machen. Die Güte der Vorhersage, und damit die Genauigkeit des Modells wird im folgenden Abtastschritt durch die Abbildung des Zustandvektors auf den Ausgangsvektor bewertet. Die zugrundeliegende Theorie sowie der prinzipielle Aufbau eines Kalman-Filters sind an sich bekannt. Auf eine weitergehende allgemeine Darstellung des Kalman-Filters wird deshalb verzichtet. Umfassende Darstellungen finden sich zum Beispiel in K. Brammer, Kalman-Bucy-Filter, Oldenburg-Verlag 1975, R. Isermann, Digitale Regelsysteme Band II, Springer Verlag 1987.

Die Hauptschwierigkeit bei der Realisierung eines Kalman-Filters liegt darin, ein geeignetes Modell für den beobachteten Prozeß anzugeben. Im folgenden wird dargestellt, wie ein erfindungsgemäßes Modell gewonnen wird.

Bild 2 zeigt ein Prozeßmodell des Lagegebersystems. Es bezeichnen: N die Eingangsmatrix für das System-Rauschen, B die Eingangsmatrix für den Eingangsvektor, z-1 ein Verzögerungsglied, C die Ausgangsmatrix, A die Prozeßmatrix, $Y_k$ den Ausgangsvektor, $V_k$ das vektorielle Meßrauschen, $W_k$ das Meßrauschen, $U_k$ den Eingangsvektor.

Die Matrizen N und B sind durch das betrachtete System vorgegeben. Die Matrix N berücksichtigt den Prozeßmodellfehler in Form eines vektoriellen Systemrauschens, durch das vektorielle Meßrauschen $V_k$ sind die Meßfehler des Lagegebers berücksichtigt. Es ist eine Eigenschaft des Kalman-Algorhitmus, daß beide Rauschprozesse an sich nicht bekannt sein müssen. Es ist nur erforderlich, das statistische Verhalten der Rauschprozesse zu kennen. Beim betrachteten Lagegebersystem ist das statische Verhalten beider Rauschprozesse bekannt. Es kann angenommen werden, daß sie gaußförmig sind oder zumindest gut durch eine Gaußkurve angenähert werden können. Die Matrix N kann dadurch in einfacher Weise als Einheitsmatrix bestimmt werden. Da im vorliegenden Fall das System selbst durch das Kalman-Filter nicht beeinflußt werden soll, hat ferner die Eingangsmatrix B den Wert Null.

Zu bestimmen ist schließlich eine Systemmatrix A, welche einerseits die Bestimmung eines möglichst genauen Drehzahlwertes gestattet und andererseits in Echtzeit berechnet werden kann. Sie wird in folgender Weise gewonnen.

Einzige für den Filteralgorithmus verwendete reale Zustandsgröße ist das Lagesignal $\alpha$ des Lagegebers. Um eine weitere Zustandsgröße zu gewinnen, werden zu dem Lagesignal die zugehörigen Werte sin$\alpha$ und cos$\alpha$ gebildet. Die durch diese trigonometrischen Umformungen erhaltenen Werte bilden die Elemente $X_1$ und $X_2$ eines zweidimensionalen Zustands-Vektors im zeitkontinuierlichen Zustandsraum. Es resultiert bei Beachtung, daß gilt = (Winkelgeschwindigkeit = Zeitableitung des Lagewinkels), das einfache Modell in Matritzendarstellung:

$$
\begin{pmatrix} \dfrac{dx_1}{dt} \\[2mm] \dfrac{dx_2}{dt} \end{pmatrix} = \begin{pmatrix} 0 & \omega \\[2mm] -\omega & 0 \end{pmatrix} \begin{pmatrix} x_1 \\[2mm] x_2 \end{pmatrix}
$$

$$
\begin{pmatrix} y_1 \\[2mm] y_2 \end{pmatrix} = \begin{pmatrix} 1 & 0 \\[2mm] 0 & 1 \end{pmatrix} \begin{pmatrix} x_1 \\[2mm] x_2 \end{pmatrix}
$$

Damit das Filter zur Drehzahlschätzung möglichst wenig Rechenzeit beansprucht, wird im weiteren vorausgesetzt, daß die Winkelgeschwindigkeit $\omega$ innerhalb eines Abtastschrittes konstant bleibt. Unter der Annahme, daß $\omega$ als konstanter Parameter aufghefaßt werden kann, läßt sich ein äquivalentes zeitdiskretes System berechnen:

$$
\begin{pmatrix} x_1 \\[2mm] x_2 \end{pmatrix}_{k+1} = \begin{pmatrix} \cos(\omega \cdot T) & \sin(\omega \cdot T) \\[2mm] -\sin(\omega \cdot T) & \cos(\omega \cdot T) \end{pmatrix} \begin{pmatrix} x_1 \\[2mm] x_2 \end{pmatrix}_{k}
$$

$$
\begin{pmatrix} y_1 \\[2mm] y_2 \end{pmatrix}_{k} = \begin{pmatrix} 1 & 0 \\[2mm] 0 & 1 \end{pmatrix} \begin{pmatrix} x_1 \\[2mm] x_2 \end{pmatrix}_{k}
$$

Zur Vervollständigung des Zustandvektors ist noch ein Ansatz für die Winkeigeschwindigkeit $\omega$ erforderlich. Hier hat es sich ebenfalls als ausreichend erwiesen, davon auszugehen, daß die Winkelgeschwindigkeit $\omega$ innerhalb eines Abtastschrittes konstant bleibt. Das vollständige Modell im zeitdiskreten Zustandsraum lautet damit:

$$
\begin{pmatrix} x_1 \\[2mm] x_2 \\[2mm] \omega \end{pmatrix}_{k+1} = \begin{pmatrix} \cos(\omega \cdot T) & \sin(\omega \cdot T) & 0 \\[2mm] -\sin(\omega \cdot T) & \cos(\omega \cdot T) & 0 \\[2mm] 0 & 0 & 1 \end{pmatrix} \begin{pmatrix} x_1 \\[2mm] x_2 \\[2mm] \omega \end{pmatrix}_{k}
$$

$$
\begin{pmatrix} y_1 \\[2mm] y_2 \end{pmatrix}_{k} = \begin{pmatrix} 1 & 0 & 0 \\[2mm] 0 & 1 & 0 \end{pmatrix} \begin{pmatrix} x_1 \\[2mm] x_2 \\[2mm] \omega \end{pmatrix}_{k}
$$

Die vorgeschlagene Bildung des Zustandsvektors aus den Elementen $\cos\alpha$ und $\sin\alpha$ hat den Vorteil, daß die Ausgangsmatrix C eine Einheitsmatrix wird. Dies vereinfacht wiederum die Berechnung und verkürzt die Rechenzeit.

Eine detailierte hardewaremäßige Realisierung des vorgeschlagenen Kalman-Filters muß hier nicht beschrieben werden, da sie ohne Mühe durch jeden Fachmann vorgenommen werden kann.

Das beschriebene Verfahren ist nicht eingeschränkt auf Motoren. Es eignet sich zur Schätzung der Geschwindigkeit eines Lagesignals bei allen Anordnungen, für die gilt: zeitliche Änderung der Lage = Drehzahl.

**Patentansprüche**

1. Verfahren zum Betrieb eines drehzahlregelbaren elektrischen Motors, insbesondere eines bürstenlosen Servomotors, durch Regelung der Motorgrößen, Strom, Lagewinkel und Drehzahl, dadurch gekennzeichnet, daß die Drehzahl ($\omega$) ausgehend alleine von dem mittels eines Lagegebers (L) gemessenen Lagewinkel ($\alpha$) durch Schätzung mittels eines Kalman-Filters (F) bestimmt wird.

2. Verfahren nach Anspruch 1 oder 2, dadurch gekennzeichnet, daß durch das Kalman-Filter Elemente eines aus wenigstens zwei Elementen aufgebauten Zustandsvektors des Lagegebersystems geschätzt werden.

3. Verfahren nach einem der vorhergehenden Ansprüche, dadurch gekennzeichnet, daß der Zustandsvektor nur die Drehzahl ($\omega$) sowie zwei weitere aus dem Lagewinkel ($\alpha$) gebildete Größen umfaßt.

4. Verfahren nach einem der vorhergehenden Ansprüche, dadurch gekennzeichnet, daß zu jedem gemessenen Lagewinkel ($\alpha$) die zugehörigen Werte für sin $\alpha$ und cos $\alpha$ berechnet werden und diese Werte zwei Elemente des Zustandsvektors bilden.

5. Verfahren nach einem der vorhergehenden Ansprüche, dadurch gekennzeichnet, daß die von dem Lagegeber gemessenen Lagewinkel ($\alpha$) digitalisiert werden.

**Claims**

1. Process for operating a speed controlled electric motor, in particular a brushless servomotor, by controlling the motor parameters, current, position angle and rotational speed, characterized in that the rotational speed ($\omega$) is determined solely on the basis of the position angle ($\alpha$) which is measured by means of a position sensor (L) by estimation using a Kalman filter (F).

2. Process according to Claim 1 or 2, characterized in that elements of a state vector, made up of at least two elements, of the position sensor system are estimated by the Kalman filter.

3. Process according to one of the preceding claims, characterized in that the state vector comprises only the rotational speed ($\omega$) and two further parameters formed from the position angle ($\alpha$).

4. Process according to one of the preceding claims, characterized in that the relevant values for sin $\alpha$ and cos $\alpha$ are calculated for each measured position angle ($\alpha$) and these values form two elements of the state vector.

5. Process according to one of the preceding claims, characterized in that the position angles ($\alpha$) measured by the position sensor are digitized.

**Revendications**

1. Procédé de mise en oeuvre d'un moteur électrique réglable en vitesse de rotation, notamment d'un servomoteur sans balai, par la régulation des grandeurs du moteur, l'intensité, l'angle de position et la vitesse de rotation, procédé caractérisé en ce que partant d'une position angulaire $\alpha$, unité mesurée par un capteur de position (L), on définit la vitesse de rotation ($\omega$) par une évaluation à l'aide d'un filtre Kalman (F).

2. Procédé selon la revendication 1 ou 2, caractérisé en ce que le filtre Kalman évalue des éléments d'un vecteur d'état du système de capteur de position, comprenant au moins deux éléments.

3. Procédé selon l'une des revendications précédentes, caractérisé en ce que le vecteur d'état ne comprend que la vitesse de rotation ($\omega$) ainsi que deux autres grandeurs formées à partir de l'angle de position ($\alpha$).

4. Procédé selon l'une des revendications précédentes, caractérisé en ce que, pour chaque angle de position ($\alpha$) mesuré, on calcule les grandeurs correspondantes sin $\alpha$ et cos $\alpha$ et ces deux valeurs forment les deux composantes du vecteur d'état.

**5.** Procédé selon l'une des revendications précédentes, caractérisé en ce qu'on numérise l'angle de position (α) mesuré par le capteur de position.

FIG. 1

# FIG. 2